Europäisches Patentamt

European Patent Office

Office européen des brevets

(19)

(11) Publication number: **0 322 489 B1**

(12) **EUROPEAN PATENT SPECIFICATION**

(45) Date of publication of patent specification: **26.02.92**

(51) Int. Cl.⁵: **E01C 11/26**, E04D 13/10, F28D 20/00, F24J 3/08

(21) Application number: **87311533.1**

(22) Date of filing: **31.12.87**

(54) **Snow melting method utilizing heat retaining function of underground aquifer without sprinkling water.**

(43) Date of publication of application:
**05.07.89 Bulletin 89/27**

(45) Publication of the grant of the patent:
**26.02.92 Bulletin 92/09**

(84) Designated Contracting States:
**BE DE FR GB NL SE**

(56) References cited:
**EP-A- 0 151 843**
**WO-A-82/01386**
**DE-A- 2 706 740**
**DE-A- 3 009 990**
**DE-A- 3 217 155**

(73) Proprietor: **Katsuragi, Kohei**
**4-21, Hirashimizu 1-chome**
**Yamagata-Shi Yamagata-Ken(JP)**

(72) Inventor: **Katsuragi, Kohei**
**4-21, Hirashimizu 1-chome**
**Yamagata-Shi Yamagata-Ken(JP)**

(74) Representative: **Palmer, Roger et al**
**PAGE, WHITE & FARRER 54 Doughty Street**
**London WC1N 2LS(GB)**

Rank Xerox (UK) Business Services

# Description

This invention relates to a method of melting snow by utilizing the heat retaining function of an aquifer located in a deep region of the ground without sprinkling water on the snow, and more particularly to a method of melting snow lying on a road or building structure by utilizing only the heat of underground water stored artificially in the ground and returning the used water again into the ground for reusing the same, as described in WO-A-8 201 386.

Recently, a method of melting and removing snow which has fallen on roads or building structures in a snowy and cold area by sprinkling underground water has widely been carried out. This method, however, is accompanied by a significant problem that, because the underground water after being sprinkled for melting the snow is caused to flow into gutters, for example, at the sides of the roads and then caused to flow through rivers into the sea, the underground water as a water resource is gradually reduced, and in a certain cases, the reduction of the underground water may cause subsidence of the ground.

In order to obviate the problem mentioned above, in the prior art, Japanese Patent Laid-Open (Kokai) No. 49-59429 (59429/1974) discloses a method and apparatus for heating water for melting snow lying on a road by utilizing the heat of the underground water. In this prior art, the apparatus comprises underground water pumping means located in two artesian wells formed to reach the aquifer near the ground surface, pumping means for pumping up river water or lake water, a heat exchanger, snow melting pipe means, and snow melting nozzles. In the use of the apparatus of this type, river water or lake water having a temperature of about 1°C in a snowy season is heated to a temperature of about 7 - 8°C through the heat exchanger by utilizing the underground water of about 14°C as a heat source, and the thus heated river water or lake water is sprinkled through the snow melting nozzles thereby to melt the snow which has fallen on the road or the like.

Japanese Utility Model Publication No. 45-25945 (25945/1970) discloses a road in which a carbonic or carbon containing material is mixed in a concrete or asphalt pavement layer constituting the surface layer of the road to increase the thermal conductivity of the road. In the thus formed road surface layer is laid an underground water passage having a discharge port opened to the edge of the road. According to the road of this character, the snow lying on the road is melted by passing through the passage underground water pumped from near the ground surface having generally a temperature of about 10°C throughout the seasons, and the used underground water is then discharged into a river or lake.

The prior art technique described above, however, is accompanied by the following problems.

In the technique or method disclosed in the Japanese Patent Laid-Open No. 49-59429, the river or lake water having a temperature of about 1°C is heated merely to 7° - 8°C through the heat exchanger by the underground water of about 14°C, and hence, the heat transfer efficiency is not good and large snow melting effect cannot be expected. In addition, since it is considerably difficult to evenly sprinkle the water over the road and unmelted snow may freeze, which is dangerous for drivers of cars and walkers, and moreover, a great amount of the underground water and the river water are required for melting the snow on the road because of the heat exchanging operation between the underground water of about 14°C and the river water of about 1°C, which is considerably lower than that of the former, so that a great amount of water are spread over the road surface and the spread water may be spattered by a running car to walkers or private houses or buildings along the road.

In the technique or method disclosed in the Japanese Utility Model Publication No. 25945/70, since the underground water near the ground surface is utilized for melting snow and discharged after being used into a river through a discharge port disposed outside of the road, the underground water as the water resource is gradually reduced, which may be a cause of subsidence of the ground, a serious social problem. In addition, since the underground water near the ground surface generally has a temperature of about 10°C, being a relatively low temperature, a great amount of the underground water is required to effectively melt and remove the snow which has fallen on the road.

An object of this invention is to eliminate the problems or drawbacks in the prior art technique for removing snow lying on a road or the like and to provide a method for melting snow lying on the road or the like without sprinkling water and by utilizing the heat retaining function of an aquifer of the under ground.

In DE-A-3009990 a ground water storage is described from which water is drawn from and returned to the storage cyclically. The water drawn from the storage is pumped through conduits and is either heated or cooled within the conduits before being returned to the storage. The returned water then causes water still held in the storage to either heat up or cool down depending upon the temperature difference between the stored water and the returning water.

It will be appreciated that in order for two ground water storage areas or aquifers to be maintained at different temperatures, the two aquifers must be thermally isolated from one another.

According to a feature of this invention, the underground water warmed by the geothermy in the aquifer is circulated through pipe means laid under substantially the entire surface of the road or the like, or the underground water warmed by the solar heat in a hot season is circulated through the pipe means in a snowy and cold season.

According to a further feature of this invention, an antifreezing liquid is caused to circulate in the pipe means and heat exchange operation is performed between the antifreezing liquid and the underground water having a temperature kept by the heat retaining function of the aquifer.

As pipe means to be laid under the surface of a road or the like, a special pipe having a superior welded joint structure can be used.

According to this invention there is provided a method of melting snow lying on a road or a structure above the ground by utilizing the heat retaining function of an aquifer located in a deep region of the ground, wherein underground water warmed by geothermy in an aquifer is pumped up through a well (A) and caused to flow through pipe means (4) to an aquifer, the pipe means (4) being laid under the road or in the structure (5) to transfer heat to snow lying thereon to melt the snow, characterized in that the underground water is pumped up from a first aquifer (7) through a first artesian well (A), the water flows through the pipe means (4) where it is cooled and thereafter flows without exposure to the atmosphere to a second aquifer (8), thermally isolated from the first aquifer (7), through a second artesian well (B) located remote from the first artesian well (A); the underground water flowing to the second artesian well (B) is stored in the second aquifer (B) and is warmed over a period of time before the next cold snow season to a higher temperature by the heat retaining function of the second aquifer (8); the warmed underground water in the second aquifer (8) is pumped up through the second artesian well (B) in the next cold snow season for melting snow and is caused to flow through said pipe means (4) to melt snow on the road or the structure (5), and the underground water thus passed through the pipe means (4) flows to the first aquifer (7) through the first artesian well (A); the underground water is stored in the first aquifer (7) and is warmed by the heat retaining function of the first aquifer (7); and the above identified steps are repeated cyclically.

The invention further provides a method of melting snow lying on a road or a structure above the ground by utilizing the heat retaining function of an aquifer located in a deep region of the ground, wherein underground water warmed by geothermy in an aquifer is pumped up in a cold season through a well (A) and caused to flow through pipe means (4) to an aquifer, the pipe means (4) being laid under the road or in the structure (5) to transfer heat to snow lying thereon to melt the snow, characterized in that the underground water is pumped up from a first aquifer (7), providing a warm or hot water zone, in a cold season through a first artesian well (A), the water flows through the pipe means (4) where it is cooled by melting snow on the pipe means (4) and thereafter flows without exposure to the atmosphere to a second aquifer (8), providing a cold water zone, thermally isolated from the first aquifer (7), through a second artesian well (B) located remote from the first artesian well (A); the cooled underground water is stored in the second aquifer (8) wherein rising of the temperature of the water is suppressed by utilizing the heat retaining function of the second aquifer (8); the underground water is pumped up in a hot season through the second artesian well (B) through the pipe means (4) to the first aquifer (7) and is heated by solar heat when passing through the pipe means (4), the thus heated underground water is stored in the first aquifer (7), wherein lowering of the raised temperature of the water is suppressed by utilizing the heat retaining function of the first aquifer (7); and the above identified steps are repeated cyclically.

In a further aspect of this invention, the snow melting method is characterized in that a first artesian well and a second artesian well are connected through conduit means incorporating heat exchanging means to cause underground water to flow from one of the first and second wells to the other, and both ends of the pipe means in which an antifreezing agent is filled and circulates, and which is laid under the surface of a road or building structure are connected through conduit means passing through the heat exchanging means so as to perform heat transfer between the antifreezing liquid and the underground water in the heat exchanging means.

In preferred embodiments of the snow melting method described above, the pipe means is arranged substantially over the entire surface of the road or building structure, and comprises a plurality of pipe sections in which adjacent two pipe sections are fused by irradiating throttled high energy beam and then rapidly quenching the fused portion by flowing cooling gas thereby to form a weld joint between the adjacent two pipe sections having an excellent crystal structure.

Preferred embodiments of this invention will now be described with reference to the accompanying drawings.

In the drawings:

FIG. 1 is a schematic plan view explanatory of first and second embodiments of this invention;

FIG. 2 shows a schematic sectional elevation explanatory of the first and second embodiments of this invention;

FIG. 3 is a view showing a modified example of FIG. 1;

FIG. 4 is a graph representing underground water temperature with elapsed time with respect to the first embodiment;

FIG. 5 is a graph representing heated and cooled underground water temperatures with elapsed time with respect to the second embodiment;

FIG. 6 is a schematic view, partially in section, explanatory of a third embodiment of this invention;

FIG. 7 shows a longitudinal section of welded portion of pipe sections constituting a pipe to be used preferably for the embodiments of this invention; and

FIGS. 8A to 8C are photomicrographs showing crystal structures of the portions near the welded portion of the pipe sections shown in FIG. 7.

The snow melting method according to this invention is generally carried out in consideration of the heat retaining function of the underground aquifer. The heat retaining function of the aquifer will be described hereunder. For example, when warm water having a temperature of about 28°C is fed into the aquifer generally with a void ratio of about 30 %, rocks, gravels, sands and the like in the aquifer are warmed to thereby form a warm water zone. The warm water zone is gradually developed into a wide range zone, thus retaining heat energy in the aquifer due to the heat retaining function of the acquifer. Conversely, when cold water is fed into the aquifer, a cold water zone is formed there.

Preferred embodiments of the non-water-sprinkling type snow melting method according to this invention will be described in detail hereunder by taking the above fact into consideration.

First Embodiment

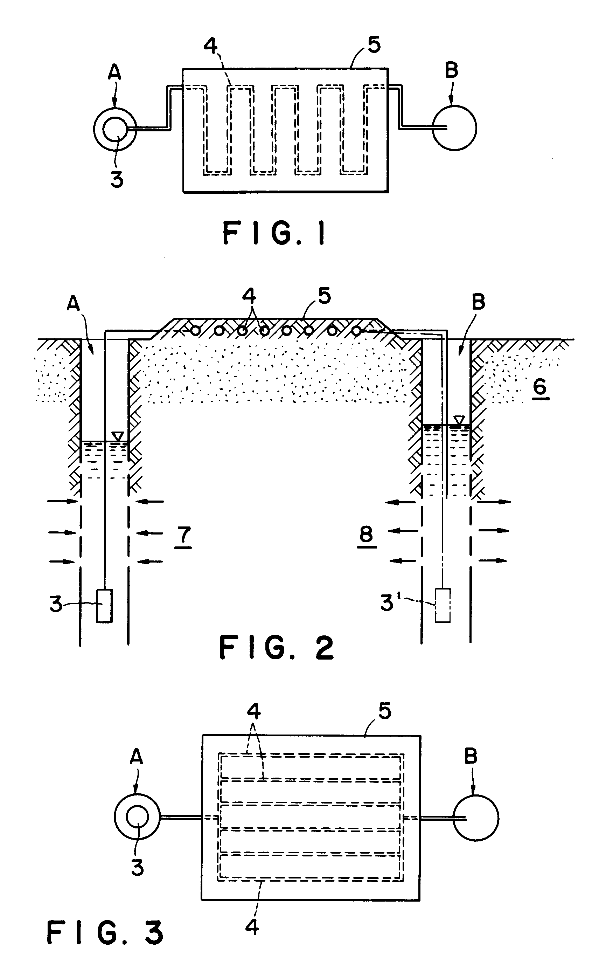

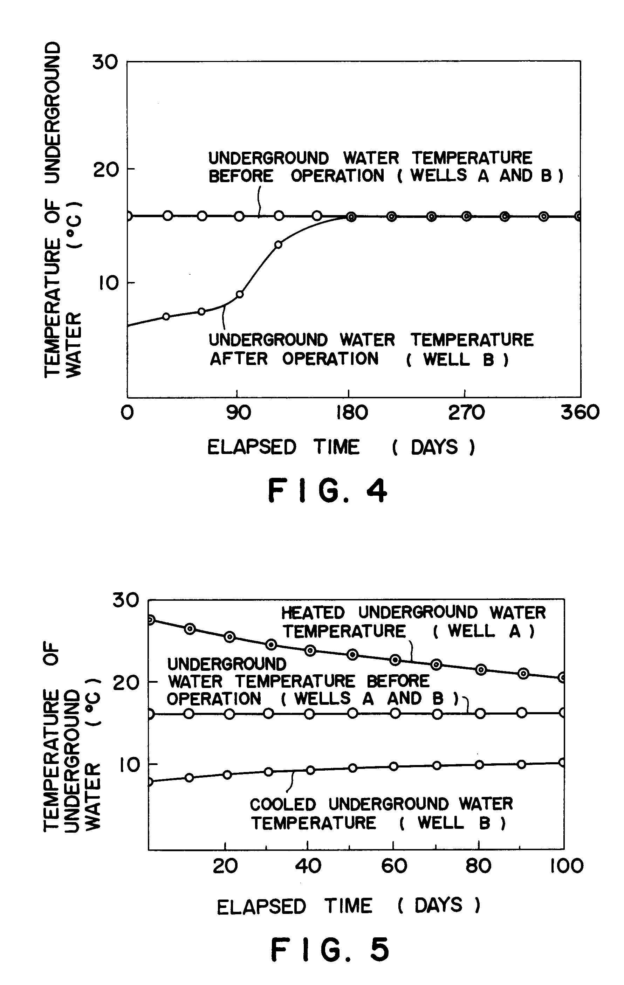

FIGS. 1 and 2 represent a case in which this invention is applied for melting and removing snow lying on a road. Referring to these figures, at least two artesian wells A and B are formed, and a heat discharging and heat collecting pipe (or pipes) 4 is laid under substantially the entire surface of the road 5 in a meandering, bent, parallel (as shown in FIG. 3), spiral, jigzag, or the like form. The pipe 4 can of course be arraned in another place such as in a building structure, under a bed of a railway, suitable for melting the snow. The ends of the pipe 4 are respectively connected to the wells A and B through conduits, for example. According to this construction or combination of the wells and the pipe arrangement, the underground water in an aquifer 7 located beneath the ground surface about 40 - 150 meters therebelow can be pumped up by the operation of a pump 3 from the well A, the underground water in the aquifer 7 being maintained at about 15 - 16°C even in a cold season as shown in FIG. 4. Accordingly, in the cold season, by causing the thus pumped up warm underground water to flow through the pipe 4 laid under the road 5 or in a building structure preferably at a speed of 0.3 - 1.5 meter/sec, the snow which has fallen on the road 5 or the building structure can be gradually melted, and hence, the freezing of the road surface can also be prevented by the heat transferred from the pipe 4.

The underground water thus used for warming the pipe 4, generally having a temperature of about 6°C, is then returned through a conduit to the other well B and stored in the deep portion of the ground, thus forming a cold water zone 8. In this manner, the used water is again returned to the aquifer 7 from the ground surface 6 to reuse the same without being exposed to the atmosphere, thus preventing the underground water from being wasted and contaminated.

As shown in the graph of FIG. 4, the underground water after being used and returned in the aquifer 8 in the well B is gradually warmed as time elapses, and in about 6 months the temperature of the once used underground water is raised again to the normal temperature of the underground water of about 15 - 16°C, which is stored there under a thermally insulated condition for the use in the next snowy and cold season.

As described above, according to this embodiment, the snow which has fallen on the road or building structure can be effectively melted and removed without sprinkling water thereon and without using a great amount of the underground water in a superior manner in comparison with the conventional method of removing the snow on the road or the like.

Second Embodiment

Another, i.e. the second embodiment of the method for melting and removing snow which has fallen on a road or the like according to this invention will be described hereunder also with reference to FIGS. 1, 2 and 3. In the second embodiment, hot or warm water heated by the solar heat in the heat or hot season and stored in the well A formed in the aquifer 7 laid in the deep portion under the ground surface at about 40 - 150 meters is utilized in the snowy and cold season by pumping up the stored water and circulating the same through the pipe arrangement 4 disposed beneath the road 5 in the manner described in detail hereunder.

The water heated by the solar heat in the hot season and stored in the aquifer 7 is maintained at a temperature of about 23 - 25°C, in the snowy and cold season which is considerably higher than the temperature of about 15 - 16°C, the normal temperature of the ground water due to the heat retaining function of the aquifer 7.

According to the second embodiment of the snow melting method of this invention, the thus heated and stored water is pumped up by the pump 3 from the well A and circulated through the heat discharging and heat collecting pipe(s) 4 laid under the road 5 thereby to melt and remove the snow which has fallen on the road 5, building structure or the like, thus preventing the snow or melted water from freezing on the road or the like. The water, after being used for melting the snow, has generally a temperature of about 6°C and is retained into the cold water zone 8 in the other well B as a cooled water.

According to the second embodiment, the water returned in the well B is utilized in the next hot season in the following manner. The returned water, having a temperature of about 7 - 10°C in summer season, which is lower than the normal underground water temperature of about 15 - 16°C, is pumped up by the operation of a pump 3', shown by imaginary lines in FIG. 2 and, after being used for cooling houses, is circulated through the pipe 4 thereby to cool the road 5, building structure or the like and to prevent the pavement of the road from softening in the hot season. The cool water from the well B is heated through the heat transfer from the heated road and building structure during the circulation through the pipe 4, and the thus heated water, having a temperature of about 28°C is returned to the well A into the deep aquifer 7 without being exposed to the atmosphere. The heated water thus returned in the well A forms a warm water zone in the acquifer 7 considerably below the ground surface zone 6 and is stored there as a heated water for melting the snow on the road or building structure in the next snowy and cold season in the manner described hereinbefore.

According to the method of this embodiment, the underground water used for melting the snow on the road or the like in the snowy and cold seaon can be effectively reused for cooling the road, building structure or the like in the hot season without being exposed to the atmosphere, so that the ground water as a water source can be kept without being wasted and contaminated.

Third Embodiment

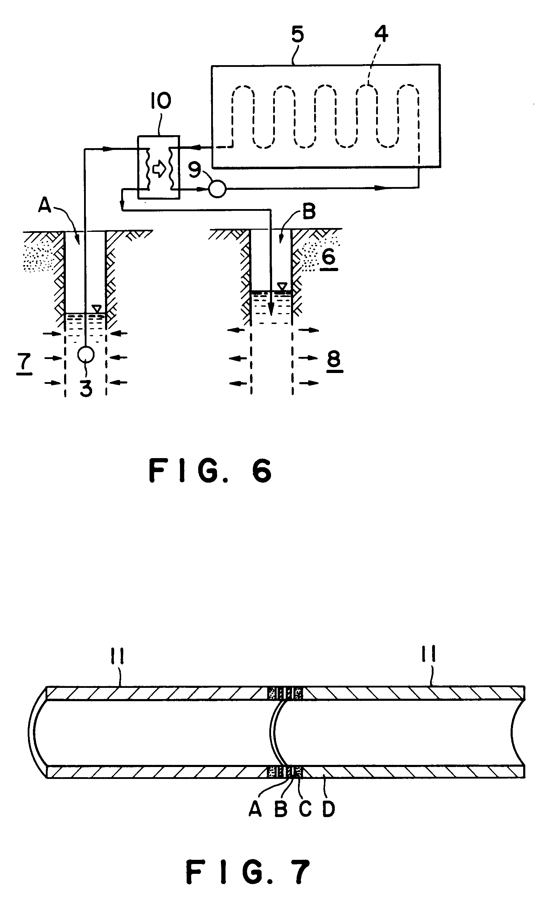

A third embodiment of the snow melting method according to this invention will be described hereunder with reference to FIG. 6, in which the underground water in the well A pumped up by the operation of the pump 3 flows into the other well B through a conduit passing through a heat exchanger 10. The pipe 4 laid under the pavement surface of the road 5 is filled with an antifreezing liquid, which is circulated in the pipe 4 by the actuation of a pump 9 incorporated in a conduit connecting both ends of the pipe 4. According to this arrangement, the heat of the underground water is transferred to the antifreezing liquid when the underground water passes through the heat exchanger 10, and the heat transferred to the antifreezing liquid is in turn transferred to the road 5 when the antifreezing liquid circulates through the pipe 4 thereby to melt the snow lying on the road 5. A heat pump may be preferably used as a heat exchanger 10.

In this embodiment, the underground water warmed by the solar heat in the hot season is stored in the well A and the cold underground water, after the heat transfer in the heat exchanger 10, is stored in the well B.

According to this embodiment, since the antifreezing liquid is filled in the pipe 4, an accidental breaking of the pipe 4, which may be caused by the freezing of the water in the pipe 4 after stopping the operation of the pump 9, can be effectively prevented.

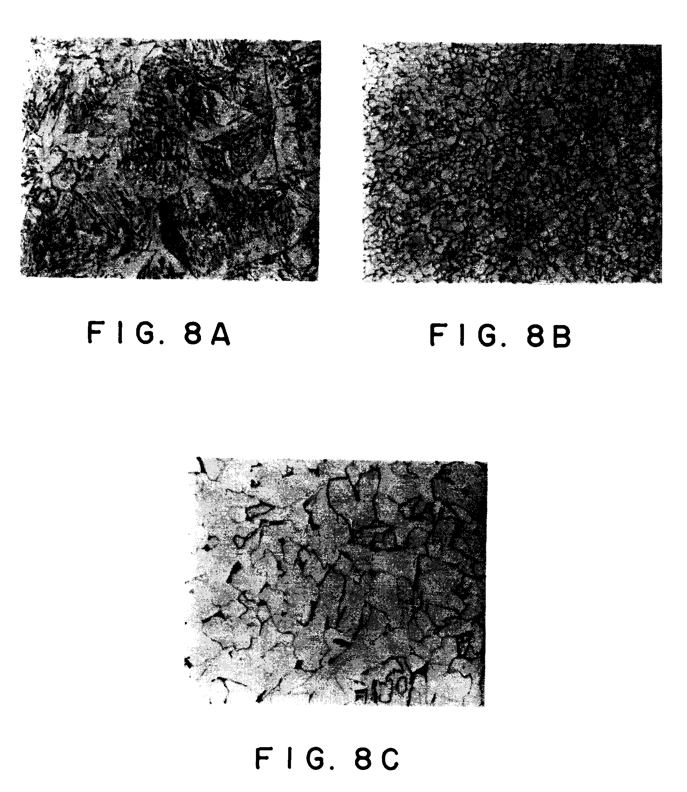

In the aforementioned three embodiments, the heat discharging and collecting pipe 4 is arranged under the road surface 5 so as to warm or cool the surface substantially entirely. A pipe having the following characteristics or structures can preferably be utilized according to this invention. These characteristics and structures will be described hereunder with reference to FIGS. 7 and 8.

A pipe used in this invention as the pipe 4 has a chemical composition prescribed by the Japanese Industrial Standards (JIS) G-3452 and is usually composed of a plurality of pipe sections. An end face of one pipe section is abutted against an end face of another pipe section. The abutted portion is welded by means of throttled high energy beams such as laser beams, and the thus welded portion is quenched rapidly by flowing argon gas through nozzle means thereby to form a welded joint, thus forming a heat discharging and collecting pipe.

FIGS. 8A, 8B and 8C are photomicrographs representing crystal structures of the welded joint portions treated by the welding heat in the abovementioned welding method, in which the photomicrograph of FIG. 8A represents a martensitic structure of a portion of a pipe adjacent the welded portion, the photomicrograph of FIG. 8B represents a fine pearlite structure of a portion of a pipe adjacent to the martensitic structure, and the photomicrograph of FIG. 8C represents a pearlite structure of a base steel pipe.

As described above, the throttled high energy beam is irradiated onto the abutting portions of the pipe sections to form a welded joint, and the cooling gas is then blown to the welded portion to rapidly quench the same.

The thus formed heat discharging and collecting pipe has a martensitic structure, a mixed structure of the martensite and fine pearlite, and the fine pearlite structure from the welded portion towards the base material of the pipe in this order. No protruded or other deformed portion was observed in the welded portion of the thus formed pipe, and hence, the smooth welded surface is obtained. In a strength test of ten pipes thus formed, carried out by bending the pipes by about 90°, no break or crack was observed.

As described hereinbefore, according to the non-water-sprinkling type snow melting method, of this invention, utilizing heat retaining function of the aquifer in the deep underground portion, snow lying on roads or building structures is effectively melted in a snowy and cold season to thereby prevent the road surface from freezing by circulating warm underground water through a pipe laid under the road surface. Moreover, the cooled underground water, after being used for melting the snow, is returned to the aquifer to form a cold water zone, and the returned cooled water is gradually warmed by the geothermy of the deep portion of the ground to a normal temperature of the underground water for the use of the next snowy and cold season. Accordingly, in comparison with the conventional water sprinkling snow melting method, more effective and economic snow melting and removing effect can be attained, by using relatively small amount of the underground water. In addition, the underground water is not sprinkled and can be reused without exposing to the atmosphere, thus preventing the underground water from being wasted and contaminated, and hence, a problem of subsidence of the ground can be obviated.

In another viewpoint, the underground water used and cooled for melting the snow in the snowy and cold season can be used for cooling the road or building structure by circulating the same through the pipe arrangement laid under the road surface or the like in the hot season. The underground water used for cooling the road is heated by the solar heat during the circulation through the pipe arrangement and the thus warmed underground water is returned to the well for the reuse thereof in the next snowy and cold season.

In a further aspect of this invention, the pumped-up underground water is circulated from one well to the other well through a heat exchanger and an antifreezing liquid filling the pipe laid under the road surface circulates through the heat exchanger, in which heat is transferred from the underground water. Accordingly, even in a case where the circulation of the antifreezing liquid stops after melting the snow on the road, the road surface as well as the interior of the pipe is never frozen, thus ensuring the safe operation and reduction of the maintenance cost.

Furthermore, since the pipe to be laid under the road surface has the improved structure, the improved strength and flexibility are achieved, and moreover, welded portions of the pipe sections have no protruded or other deformed portion, enabling the free pipe arrangement, and the pipe is durable for a long time use without forming breaks or cracks. Such pipe is very suitable for a pipe to be laid under the road surface through which the underground water circulates in accordance with the snow melting method of this invention.

The present invention includes apparatus for carrying out the methods described and claimed herein. Preferably the apparatus includes an improved pipe for conveying the water below the surface on which snow is to be melted.

## Claims

1. A method of melting snow lying on a road or a structure above the ground by utilizing the heat retaining function of an aquifer located in a deep region of the ground, wherein underground water warmed by geothermy in an aquifer is pumped up through a well (A) and caused to flow through pipe means (4) to an aquifer, the pipe means (4) being laid under the road or in the structure (5) to transfer heat to snow lying thereon to melt the snow,

   characterized in that the underground water is pumped up from a first aquifer (7) through a first artesian well (A), the water flows through the pipe means (4) where it is cooled and thereafter flows without exposure to the atmosphere to a second aquifer (8), thermally isolated from the first aquifer (7), through a second artesian well (B) located remote from the first artesian well (A);

   the underground water flowing to the second artesian well (B) is stored in the second aquifer (B) and is warmed over a period of time before the next cold snow season to a higher temperature by the heat retaining function of the second aquifer (8);

   the warmed underground water in the second aquifer (8) is pumped up through the second artesian well (B) in the next cold snow season for melting snow and is caused to flow through said pipe means (4) to melt snow on the road or the structure (5), and the underground water thus passed through the pipe means (4) flows to the first aquifer (7) through the first artesian well (A);

the underground water is stored in the first aquifer (7) and is warmed by the heat retaining function of the first aquifer (7); and the above identified steps are repeated cyclically.

2. The method according to claim 1, wherein the first aquifer (7) is located beneath the ground surface at a depth of about 40 to 150 metres.

3. A method of melting snow lying on a road or a structure above the ground by utilizing the heat retaining function of an aquifer located in a deep region of the ground, wherein underground water warmed by geothermy in an aquifer is pumped up in a cold season through a well (A) and caused to flow through pipe means (4) to an aquifer, the pipe means (4) being laid under the road or in the structure (5) to transfer heat to snow lying thereon to melt the snow,

characterized in that the underground water is pumped up from a first aquifer (7), providing a warm or hot water zone, in a cold season through a first artesian well (A), the water flows through the pipe means (4) where it is cooled by melting snow on the pipe means (4) and thereafter flows without exposure to the atmosphere to a second aquifer (8), providing a cold water zone, thermally isolated from the first aquifer (7), through a second artesian well (B) located remote from the first artesian well (A);

the cooled underground water is stored in the second aquifer (8) wherein rising of the temperature of the water is suppressed by utilizing the heat retaining function of the second aquifer (8);

the underground water is pumped up in a hot season through the second artesian well (B) through the pipe means (4) to the first aquifer (7) and is heated by solar heat when passing through the pipe means (4), the thus heated underground water is stored in the first aquifer (7), wherein lowering of the raised temperature of the water is suppressed by utilizing the heat retaining function of the first aquifer (7); and the above identified steps are repeated cyclically.

4. The method according to claim 3, wherein the first aquifer (7) is located beneath the ground surface at a depth of about 40 to 150 metres.

5. The method according to either of claims 3 or 4, wherein the water heated by solar heat is maintained in the first aquifer (7) at a temperature of about 23 to 25°C.

6. The method according to either of claims 3 or 4, wherein the cooled water pumped to the second aquifer (8) is at a temperature of about 7 to 10°C.

**Revendications**

1. Procédé de fusion de la neige tombée sur une route ou sur une structure au-dessus du sol, en utilisant la fonction de conservation de la chaleur d'une zone aquifère située dans une région profonde du sol, dans lequel on pompe l'eau souterraine, chauffée par la géothermie dans une zone aquifère, par un puits (A) et on la fait s'écouler, par des moyens (4) constituant des conduites, dans une zone aquifère, les moyens (4) constituant les conduites étant placés sous la route ou dans la structure (5) pour transférer la chaleur à la neige qui y est tombée, pour la faire fondre,

procédé caractérisé par le fait que l'on pompe l'eau souterraine en provenance d'une première zone aquifère (7) par l'intermédiaire d'un premier puits artésien (A), que l'eau s'écoule à travers des moyens (4) constituant les conduites où elle se refroidit et qu'ensuite elle s'écoule, sans être exposée à l'atmosphère, dans une seconde zone aquifère (8), thermiquement isolée d'avec la première zone aquifère (7), par l'intermédiaire d'un second puits artésien (B) situé à distance du premier puits artésien (A);

par le fait que l'eau souterraine qui s'écoule dans le second puits artésien (B) s'accumule dans la seconde zone aquifère (B) et se réchauffe pendant une certaine période de temps, avant la prochaine saison froide et neigeuse, pour atteindre une température plus élevée, grâce à la fonction de conservation de la chaleur de la seconde zone aquifère (8);

par le fait qu'à la saison froide neigeuse suivante, on pompe l'eau souterraine, réchauffée, qui se trouve dans la seconde zone aquifère (8), par l'intermédiaire du second puits artésien (B), pour faire fondre la neige et qu'on la fait s'écouler par lesdits moyens (4) constituant les conduites pour faire fondre la neige qui se trouve sur la route ou sur les structures (5), et que l'eau souterraine qui est ainsi passée par les moyens (4) constituant les conduites s'écoule dans la première zone aquifère (7) par l'intermédiaire du premier puits artésien (A);

par le fait que l'eau souterraine s'accumule dans la première zone aquifère (7) et y est chauffée par la fonction de conservation de la chaleur de la première zone aquifère (7); et que le étapes identifiées ci-dessus se répètent cycliquement.

2. Procédé selon la revendication 1, dans lequel la première zone aquifère (7) est située en dessous de la surface du sol, à une profondeur d'environ 40 à 150 mètres.

3. Procédé de fusion de la neige tombée sur une route ou sur une structure au-dessus du sol, en utilisant la fonction de conservation de la chaleur d'une zone aquifère située dans une région profonde du sol, dans lequel en saison froide, on pompe l'eau souterraine, chauffée par la géothermie dans une zone aquifère, par un puits (A) et on la fait s'écouler, par des moyens (4) constituant des conduites, dans une zone aquifère, les moyens (4) constituant les conduites étant placés sous la route ou dans la structure (5) pour transférer la chaleur à la neige qui y est tombée, pour la faire fondre,

procédé caractérisé par le fait qu'en saison froide, on pompe l'eau souterraine en provenance d'une première zone aquifère (7), qui constitue une zone d'eau chaude, par l'intermédiaire d'un premier puits artésien (A), que l'eau s'écoule par les moyens (4) constituant les conduites où elle se refroidit en faisant fondre la neige qui se trouve sur les moyens (4) constituant les conduites et qu'elle s'écoule ensuite, sans être exposée à l'atmosphère, dans une seconde zone aquifère (8), qui constitue une zone d'eau froide, thermiquement isolée d'avec la première zone aquifère (7), par l'intermédiaire d'un second puits artésien (B) situé à distance du premier puits artésien (A);

par le fait que l'eau souterraine refroidie s'accumule dans la seconde zone aquifère (8) où la montée de l'eau en température est empêchée par utilisation de la fonction de conservation de la chaleur de la seconde zone aquifère (8);

par le fait qu'en saison chaude, on pompe l'eau souterraine, par l'intermédiaire du second puits artésien (B), par les moyens (4) constituant les conduites, dans la seconde zone aquifère (7) et qu'elle est chauffée par la chaleur solaire lorsqu'elle passe dans les moyens (4) constituant les conduites, que l'eau souterraine ainsi chauffée s'accumule dans la première zone aquifère(7), où la descente de l'eau en température est empêchée par utilisation de la fonction de conservation de la chaleur de la première zone aquifère (7); et que les étapes identifiées ci-dessus se répètent cycliquement.

4. Procédé selon la revendication 3, dans lequel la première zone aquifère (7) est située sous la surface du sol à une profondeur d'environ 40 à 150 mètres.

5. Procédé selon l'une ou l'autre des revendications 3 ou 4, dans lequel l'eau chauffée par la chaleur solaire se maintient dans la première zone aquifère (7) à une température d'environ 23 à 25° C.

6. Procédé selon l'une ou l'autre des revendications 3 ou 4, dans lequel l'eau froide envoyée, par pompage, dans la seconde zone aquifère (8), est à une température d'environ 7 à 10° C.

**Patentansprüche**

1. Eine Methode zum Schmelzen von auf der Straße oder einem über der Erdoberfläche befindlichen Bauwerk liegendem Schnee unter Ausnutzung der Wärmespeicherfunktion einer tief im Boden befindlichen wasserführenden Gesteinsschicht(aquifer), in welcher durch Geothermik in einer wasserführenden Gesteinsschicht erwärmtes Grundwasser durch einen Brunnen(A) nach oben gepumpt wird und man dieses dann durch ein Leitungssystem(4) fließen läßt, wobei das Leitungssystem(4) unterhalb der Straße oder in dem Bauwerk(5) verlegt ist, um Wärme zu dem darauf liegenden Schnee leiten zu können und ihn dadurch zum Schmelzen zu bringen, dadurch gekennzeichnet, daß das Grundwasser aus einer ersten wasserführenden Gesteinsschicht(7) durch einen ersten artesischen Brunnen (A) nach oben gepumpt wird, das Wasser durch das Leitungssystem (4) fließt, wo es gekühlt wird, und anschließend, ohne mit der Atmosphäre in Berührung zu kommen, zu einer zweiten wasserführenden Gesteinsschicht(8), welche von der ersten wasserführenden Gesteinsschicht(7) wärmeisoliert ist, durch einen zweiten artesischen Brunnen(B), der vom ersten artesischen Brunnen(A) in einer Entfernung angeordnet ist, fließt;

das zum zweiten artesischen Brunnen(B) fließende Grundwasser in der zweiten wasserführenden Gesteinsschicht(B) gespeichert wird und über einen gewissen Zeitraum vor der nächsten kalten schneebringenden Jahreszeit durch die Wärmespeicherfunktion der zweiten wasserführenden Gesteinsschicht(8) auf eine höhere Temperatur erwärmt wird; das erwärmte Grundwasser in der zweiten wasserführenden Gesteinsschicht(8) in der nächsten kalten schneebringenden Jahreszeit durch den zweiten artesischen Brunnen(B) nach oben gepumpt wird, um den Schnee zu schmelzen, und welches Grundwasser man dann durch das genannte Leitungssystem(4) fließen läßt, um den Schnee auf der Straße oder dem Bauwerk(5) zum Schmelzen zu bringen, und das Grundwasser, das auf diese Weise durch das Leitungssystem geflossen ist, durch den ersten artesischen Brunnen(A) zur ersten wasserführenden Gesteinsschicht(7) fließt;

das Grundwasser in der ersten wasserführenden Gesteinsschicht(7) gespeichert wird und aufgrund der Wärmespeicherfunktion der ersten wasserführenden Gesteinsschicht(7) erwärmt wird; und daß die genannten Verfahrensschritte zyklisch wiederholt werden.

2. Die Methode nach Anspruch 1, bei welcher die erste wasserführende Gesteinsschicht(7) sich unterhalb der Erdoberfläche in einer Tiefe von ca. 40 bis 150 m befindet.

3. Eine Methode zum Schmelzen von auf einer Straße oder einem Bauwerk über der Erdoberfläche liegendem Schnee unter Ausnutzung der Wärmespeicherfunktion einer tief unter der Erde liegenden wasserführenden Gesteinsschicht, bei welcher Grundwasser, das durch Geothermik in einer wasserführenden Gesteinsschicht erwärmt worden ist, in der kalten Jahreszeit durch einen Brunnen (A) nach oben gepumpt wird und welches man dann durch ein Leitungssystem(4) zu einer wasserführenden Gesteinsschicht fließen läßt, wobei das Leitungssystem(4) unterhalb der Erdoberfläche oder in dem Bauwerk (5) verlegt ist, um Wärme zu dem darauf liegenden Schnee zu leiten und ihn damit zum Schmelzen zu bringen,

dadurch gekennzeichnet, daß das Grundwasser in der kalten Jahreszeit aus einer ersten wasserführenden Gesteinsschicht(7),welche eine Warm- oder Heißwasserzone darstellt, durch einen ersten artesischen Brunnen(A) nach oben gepumpt wird, das Wasser durch das Leitungssystem(4) fließt, wo es durch den schmelzenden Schnee auf dem Leitungssystem gekühlt wird und anschließend, ohne mit der Atmosphäre in Berührung zu kommen, zu einer zweiten wasserführenden Gesteinsschicht(8), welche eine Kaltwasserzone darstellt und welche von der ersten wasserführenden Gesteinsschicht(7) wärmeisoliert ist, durch einen zweiten artesischen Brunnen(B), der im Abstand zum ersten artesischen Brunnen (A) angeordnet ist, fließt;

das gekühlte Grundwasser in der zweiten wasserführenden Gesteinsschicht(8) gespeichert wird, wobei ein Ansteigen der Wassertemperatur durch Ausnutzung der Wärmespeicherfunktion der zweiten wasserführenden Gesteinsschicht(8) verhindert wird;

das Grundwasser in der heißen Jahreszeit durch den zweiten artesischen Brunnen(B)nach oben gepumpt wird und durch das Leitungssystem(4) zur ersten wasserführenden Gesteinsschicht(7)gelangt und mittels Solarwärme erwärmt wird, während es durch das Leitungssystem(4) fließt, das so erwärmte Grundwasser in der ersten wasserführenden Gesteinsschicht(7) gespeichert wird,wobei ein Absinken der erhöhten Temperatur des Wassers mittels Ausnutzung der Wärmespeicherfunktion der ersten wasserführenden Gesteinsschicht(7) verhindert wird; und daß die oben genannten Verfahrensschritte zyklisch wiederholt werden.

4. Die Methode nach Anspruch 3, in welcher die erste wasserführenden Gesteinsschicht(7) unter der Erdoberfläche in einer Tiefe von ca. 40 bis 150 m liegt.

5. Die Methode nach Anspruch 3 oder 4, in welcher das durch die Solarwärme erwärmte Wasser in der ersten wasserführenden Gesteinsschicht(7) auf einer Temperatur von ca. 23 bis 25$^\circ$C gehalten wird.

6. Die Methode nach Anspruch 3 oder 4, in welcher das gekühlte zur zweiten wasserführenden Gesteinsschicht(8) gepumpte Wasser eine Temperatur von ca. 7 bis 10$^\circ$C aufweist.

F I G. I

FIG. 2

FIG. 3

EP 0 322 489 B1

F I G. 4

F I G. 5

11

FIG. 6

FIG. 7

F I G. 8 A

F I G. 8 B

F I G. 8 C